# EUROPEAN PATENT APPLICATION

(11) **EP 1 705 914 A2**
(43) Date of publication of application: **27.09.2006**
(21) Application number: 06005519.1
(22) Date of filing: 17.03.2006
(51) Int. Cl.: H04N 7/16, H04H 1/00

(54) **Broadcast terminal for searching broadcast content and method thereof**

(30) Priority: 21.03.2005 KR 2005023371
(71) Applicant: LG Electronics Inc., Yongdungpo-Gu Seoul 150-010 (KR)
(72) Inventor: Kim, Woo-Seong, Gwangmyeong Gyeonggi-Do (KR)
(74) Representative: Katérle, Axel

(57) **Abstract**

A broadcast terminal and corresponding method of using the terminal includes receiving at the terminal a request for information from a user. This request for information relates to broadcast content received by the terminal. The method further includes searching the terminal for the information. If the information is found, then the method further includes displaying the information. Otherwise, if the information is not found, then the method further includes sending a search request for the desired information to one or more associated terminals, responsive to the initial request for information from the user.

## Description

### BACKGROUND OF THE INVENTION

### Field of the Invention

The present invention relates to a mobile communications terminal, and more particularly to a broadcast terminal for searching for broadcast content for reducing a load upon a service provider (SP) server, and for efficiently searching information relating to digital multimedia broadcasting.

### Description of the Related Art

In general, a mobile communication terminal is a device which enables a user to wirelessly call or otherwise contact another party while the user is located within the service area of a base station (BS). Such communications are typically accomplished via switching control of a mobile switching center (MSC), which is in communication with the BS. The mobile communication terminal permits voice communications, data communications which include items such as symbols, numerals, and characters, and multimedia communications, which include image signals.

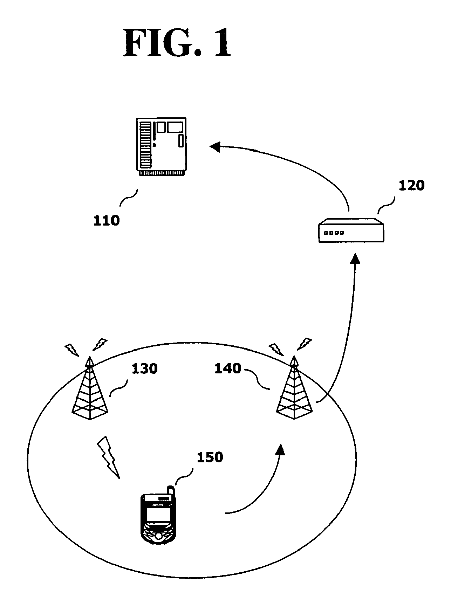

Conventional mobile communication terminals include broadcast terminals, personal digital assistants (PDA) terminals, smart terminals, and the like. In addition, there is ongoing research into broadcast terminals that can support digital multimedia broadcasting (e.g., audio, video, and data services) through satellite communications. As an example, a digital multimedia broadcasting (DMB) terminal and associated DMB system for searching for broadcast content, in accordance with the related art, will now be described with reference to FIG. 1.

The DMB system of FIG. 1 includes first base station 130 transmitting broadcast content through a forward channel, and DMB terminal 150 which receives the transmitted broadcast content. The DMB terminal is structured to send a search request for information responsive to user input. The DMB system also includes second base station 140, which is shown receiving information from the DMB terminal via a reverse channel. Service provider (SP) server 110 receives information transmitted by second base station 140 via packet data service node (PDSN) 120. Communications sent from the SP server to DMB terminal 150 may also pass through PDSN 120 and second base station 140.

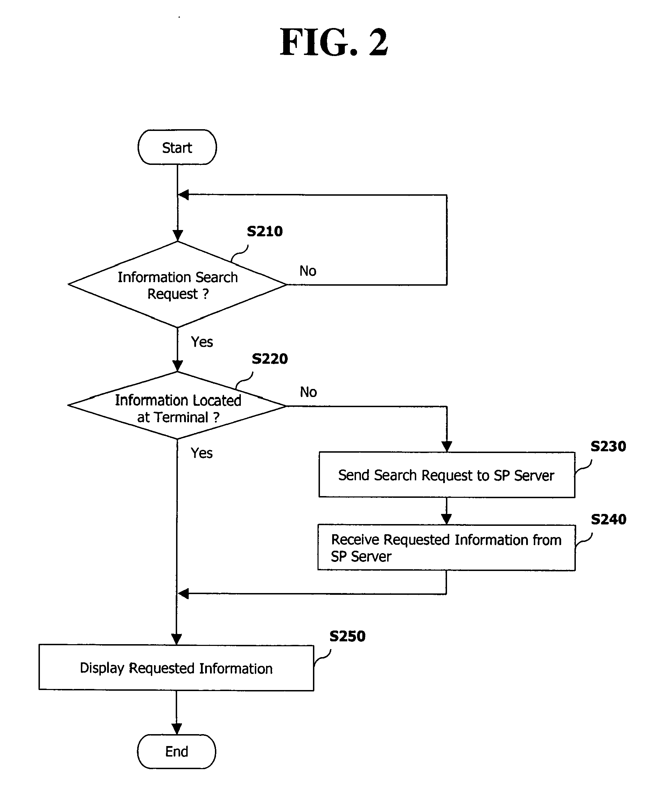

Turning now to FIG. 2, a flowchart is shown which depicts a method of searching for broadcast content of the DMB terminal in accordance with the related art. In block S210, the DMB terminal determines if the user has entered or otherwise submitted an information search request. If there is no such request, processing flows back to block S210 and the determination operation of this block is repeated. If a search request has been entered, processing flows to block S220.

In block 220, the DMB terminal determines if the requested information is located within the DMB terminal. If this information is present, then processing flows to block S250 so that the information can be displayed on the DMB terminal. On the other hand, if the requested information is not present on the DMB terminal, then processing flows to block S230. In block 230, the DMB terminal sends a search request for the desired information to the SP server. Upon receiving the search request, the SP server will generate and send the desired information, which is subsequently received by the DMB terminal (block S240). The received information may then be displayed by the DMB terminal in accordance with block S250.

A method of searching for broadcast content of a DMB terminal in accordance with the related art will now be described in more detail in conjunction with FIGS. 1 and 2. First, DMB terminal 150 may receive broadcasting guide information via first base station 130. A typical DMB terminal includes a display that is configured to display broadcasting guide information in a format suitable for viewing by a user. In many cases, the user can select desired broadcast content, which is ultimately received by DMB terminal 150 via a forward channel.

In block S210, DMB terminal 150 determines if a user has input a request for information relating to the received broadcast content. Specifically, the user may input a search request for detailed information which is related to the received broadcast content. The user inputs this search request using DMB terminal 150.

After entering the search request, DMB terminal 150 then determines if the information relating to the search request is present within the DMB terminal (block S220). For example, DMB terminal 150 may be configured to store various types of information in the form of metadata. Accordingly, if the requested information is located on the DMB terminal, then such information may be displayed to the user. This may be accomplished using the metadata which corresponds to the search request.

On the other hand, if the information relating to the search request is not present within DMB terminal 150, the search request may then be sent to SP server 110 (S230). This operation may be accomplished by the DMB terminal generating a search request message, which requests that a search be performed for the user-requested information. The DMB terminal may then send the search request message, using a reverse channel, to SP server 110. Such a transmission is sent to the SP server via second base station 140 and PDSN 120.

SP server 110 ultimately receives the search request message from DMB terminal 150, and responsively generates a search response message that pertains to the user-requested search request. The SP server then sends the generated search response message to DMB terminal 150.

DMB terminal 150 eventually receives the search response message from SP server 110 (block S240). The DMB terminal may then display information associated with the search response message using, for example, a conventional display technique (block S250).

The foregoing is a description of a related art DMB system and corresponding method of searching for broadcast content associated with a DMB. FIGS. 1 and 2 demonstrate that the DMB terminal can request and subsequently receive information about received digital satellite broadcasts from the SP server. A drawback of this arrangement is that the SP server suffers from increasing loads corresponding to increasing numbers of search requests from DMB terminals. That is, because SP server 110 accommodates search requests from a number of DMB terminals, the SP server may experience high-load conditions as the number of DMB terminals that request searches increases.

### SUMMARY OF THE INVENTION

Features and advantages of the invention will be set forth in the description which follows, and in part will be apparent from the description, or may be learned by practice of the invention. The objectives and other advantages of the invention will be realized and attained by the structure particularly pointed out in the written description and claims hereof as well as the appended drawings.

In accordance with an embodiment, a terminal includes an input unit for receiving user input, and a controller for sending a search request for information to at least one associated terminal responsive to user input. The search request relates to broadcast content received by the terminal.

In one aspect, the terminal includes a display for displaying content information which is received from the associated terminal. Note that the terminal may be configured as a broadcast terminal.

In another aspect, the terminal includes memory for storing content information.

In yet another aspect, the controller may be configured to send the search request for information to a plurality of associated terminals, responsive to user input.

In still yet another aspect, the terminal may include a display for displaying content information which is received from one of a plurality of associated terminals

In one aspect, the controller is structured to send the search request for information using a transmission operation such as a unicast, multicast, or broadcast.

In accordance with an alternative embodiment, if requested information is not received from the associated terminal responsive to the search request, then the controller is structured to send a second search request for information to a service provider server. This second search request also relates to broadcast content received by the terminal. If desired, the terminal may also include a display for displaying content information which is received from the service provider server.

In yet another embodiment, a broadcasting system includes a first terminal for sending a search request message for information responsive to user input. This information relates to broadcast content received by the first terminal. The system may further include a second terminal for receiving the search request message for information, and for responsively sending to the first terminal a response message which includes content information corresponding to the search request message.

In one aspect, the system further includes a first base station for transmitting the broadcast content to the first terminal through a forward channel.

In another aspect, if the content information does not include the information of the search request message, then the first terminal is structured to send a second search request for information to a service provider server. This second search request also relates to broadcast content received by the first terminal.

According to one feature, the system further includes a second base station for transmitting the second search request for information received from the first terminal through a reverse channel.

Yet another feature includes a communication between the first terminal and the second terminal that defines an ad-hoc network having a wireless link structure.

In accordance with yet another embodiment of the present invention, a method of searching for broadcast information includes receiving at the terminal a request for information from a user. This request for information relates to broadcast content received by the terminal. The method further includes searching the terminal for the information. If the information is found during the searching, then the method further includes displaying the information. Otherwise, if the information is not found during the searching, then the method further includes sending a search request to at least one associated terminal responsive to the request for information from the user.

According to one aspect, the method further includes receiving content information from the associated terminal responsive to the search request, and storing the content information in memory.

In another aspect, the method further includes sending the search request for information to a plurality of associated terminals responsive to user input.

In another aspect, the method further includes receiving content information from the associated terminal responsive to the search request. In this example, the content information includes a message indicating that requested information is not present on the second terminal.

In another aspect, if requested information is not received from the associated terminal responsive to the search request, then the method further includes sending a second search request for information to a service provider server. The second search request relates to broadcast content received by the terminal.

In yet another aspect, the method may further include displaying content information overlaid on the broadcast content.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention. Features, elements, and aspects of the invention that are referenced by the same numerals in different figures represent the same, equivalent, or similar features, elements, or aspects in accordance with one or more embodiments. In the drawings:
FIG. 1 is a schematic diagram showing a DMB system for searching for broadcast content in accordance with the related art;
FIG. 2 is a flowchart of a method for searching for broadcast content of a DMB terminal in accordance with the related art;
FIG. 3 is a schematic diagram showing a broadcasting system for searching for broadcast content in accordance with the present invention;
FIG. 4 is a schematic diagram showing a broadcast terminal for searching for broadcast content in accordance with an embodiment of the present invention; and
FIG 5 is a flowchart of a method for searching for broadcast content in accordance with an embodiment of the present invention.

### DETAILED DESCRIPTION OF THE PREFERRED EMBODIMENTS

Embodiments of a broadcasting system for searching for broadcast content, and corresponding methods, will now be described in detail with reference to the accompanying drawing figures. As an example, such embodiments reduce loads on a service provider (SP) server by efficiently searching for information about broadcast content, and by initiating search requests from one or more additional broadcast terminals to supplement or replace requests sent to the SP server. In addition, a broadcast terminal according to an embodiment of the present invention may be applied to other types of systems, such as digital video broadcasting handheld (DVB-H) systems, media-forward link only (Media-Flo) systems, digital multimedia broadcasting (DMB) systems, and the like. For clarity, various embodiments will be described in conjunction with a "terminal," but it is to be understood that such teachings apply equally to other types of terminals (e.g., broadcast terminals).

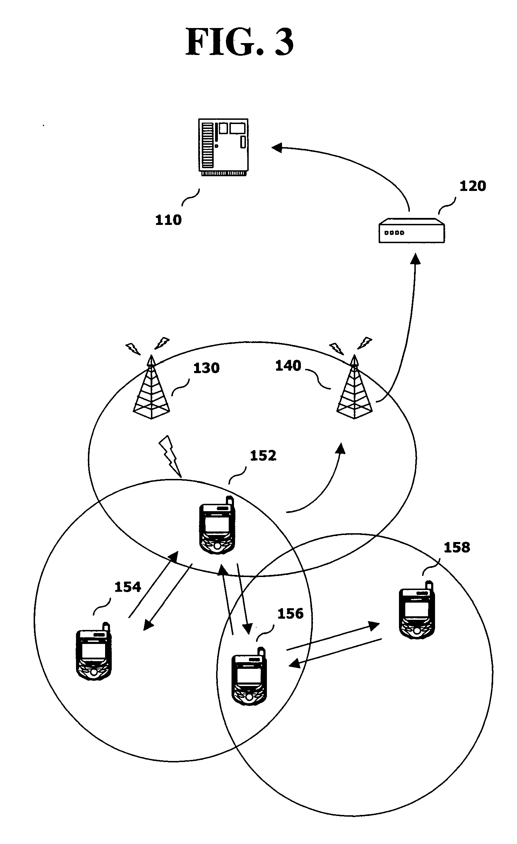

FIG. 3 is a schematic diagram illustrating a broadcasting system for searching for broadcast content in accordance with an embodiment of the present invention. In this figure, the system includes first base station 130 transmitting broadcast content through a forward channel. First terminal 152 receives the transmitted broadcast content, and sends to second base station 140, via a reverse channel, user-requested searches relating to the received broadcast content. SP server 110 receives the transmitted information through PDSN 120, and responsively provides the requested information to first terminal 152.

The system also includes second terminal 154, which may be configured to provide information to first terminal 152, responsive to a user-requested search. As will be described in more detail herein, it is not always necessary for first terminal 152 to send requests for information to SP server 110 since the desired information may be available from other terminals located within the system (e.g., terminals 154, 156, and 158).

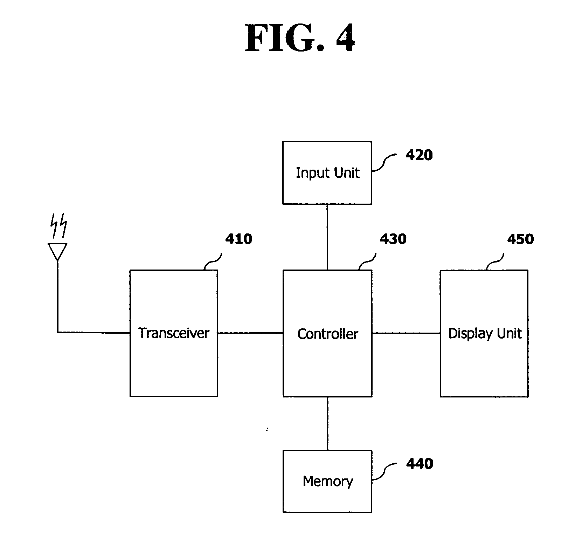

FIG 4 is a schematic diagram depicting a terminal for searching for broadcast content in accordance with an embodiment of the present invention. As shown in this figure, the terminal includes transceiver 410 for receiving broadcast content, input unit 420 for user input, and controller 430 which enables user-requested searching with regard to received broadcast content. The terminal also includes display 450 for displaying user-requested search information, and memory 440 for storing the received search information.

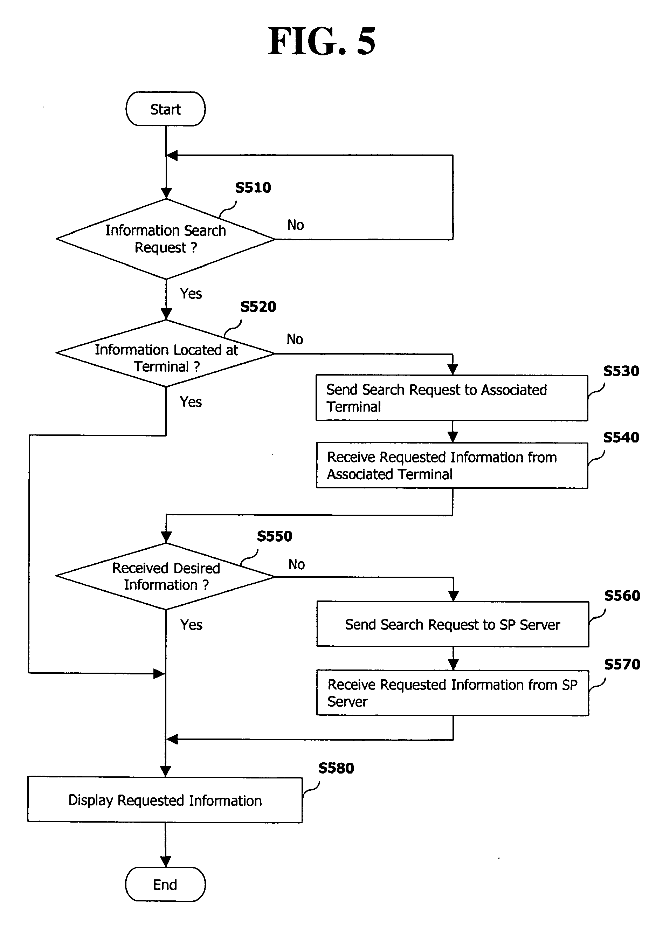

FIG. 5 is a flowchart depicting a method for searching for broadcast content associated with a terminal according to an embodiment of the present invention. In block S510, the first terminal determines if the user has input an information search request. If there is no such request, then processing flows back to block S510 so that the determination operation of this block may be repeated. If there is a search request, processing flows to block S520.

The next operation determines if the user-requested information is stored at the first terminal (block S520). If this information is stored at the first terminal, then processing flows to block S580. On the other hand, if this information is not stored at the first terminal, then processing flows to block S530. In block S530, the first terminal initiates a search request for the user-requested information. This search request is sent to one or more terminals, which will respond with the requested information or an indication that such information is not available (S540).

In block S550, the first terminal determines if the response received from one or more terminals includes the user-requested information. If it does, processing flows to block S580 so that the user-requested information can be displayed using, for example, a predetermined display technique. On the other hand, if the user-requested information is not present in the response received from the other terminal or terminals, then processing flows to block S560.

In block S560, the first terminal sends to the SP server a search request for the user-requested information. This operation is desired since the request sent to the other terminals did not return the desired user-requested information. At some point, the SP server will communicate a response message, which may include user-requested information, to the first terminal (block S570). Such information may then be displayed in accordance with block S580.

A method for searching for user-requested information relating to broadcast content will now be described in more detail in conjunction with FIGS. 3, 4, and 5. Initially, first terminal 152 receives broadcast guide information from first base station 130. The first terminal includes a display structured to display the broadcast guide information, which is provided to the first terminal by base station 130 via a forward channel. The first terminal may also include an input unit, which is structured to permit the user to enter or otherwise select desired broadcast content.

First terminal 152 may include controller 430, which is configured to determine if a user has input a search request for information relating to the received broadcast content (block S510). Such a request may be entered using, for example, input unit 420. Examples of the types of information that may be included in a search request include characters, properties, writers, geographic location associated with the broadcast content, and the like. Controller 430 of the first terminal receives the user search request, and then searches memory 440 to determine if the requested information is present (block S520). First terminal 152 may store various type of information in the form of a metadata, for example.

On the other hand, if the requested search information is not present within first terminal 152, controller 430 of the first terminal may generate and send a search request message to one or more terminals, which are also referred to herein as "associated terminals," present within a particular service area (block S530). In the example of FIG. 3, first terminal 152 may send the search request to second terminal 154, third terminal 156, or both terminals. The various terminals 152, 154, and 156 form an ad-hoc network from which the first terminal may request and receive messages related to the information search request.

In accordance with an embodiment, first terminal 152 may be configured to transmit a search request message using various transmission techniques including, for example, unicast, multicast, and broadcast, among others. The particular terminals to which first terminal may transmit messages may be predetermined.

To facilitate wireless data transmission and reception between the various terminals (e.g., terminals 152, 154, 156), such terminals may be configured with intelligent agent based-middleware. This middleware is software that connects applications and facilitates data exchange.

At some point during operation, second terminal 154 receives the search request message that was transmitted by first terminal 152. The second terminal then determines if information corresponding to the search request message is present within the second terminal. Such information is typically stored in a database within the memory of the second terminal. As used herein, the term database includes information that may be shared by multiple users. Accordingly, each of the various terminals which receive broadcast content may develop broadcast-related information in a single database.

After receiving the search request message from the first terminal, second terminal 154 then generates and subsequently sends a search response message to first terminal 152. When information corresponding to the search request message is present within second terminal 154, the search response message sent by the second terminal includes such information. On the other hand, when information corresponding to the search request message does not exist in second terminal 154, the search response message sent by second terminal 154 may include a notification that the requested information was not found at the second terminal.

In accordance with an embodiment, second terminal 154 may additionally or alternatively generate and send a search request message to one or more additional terminals (e.g., third terminal 156 and/or fourth terminal 158) in an attempt to locate the desired information requested by the user. For example, second terminal 154 may send the search request message to third terminal 156, which then receives this message. Third terminal 156 determines if information corresponding to the search request message is present within the third terminal using, for example, the information determining techniques discussed above in conjunction with the first and second terminals.

Third terminal 156 then generates and subsequently sends a search response message to first terminal 152. If third terminal 156 has the desired information, the search response message may include this information. On the other hand, if third terminal 156 does not contain the desired information, the search response message sent to first terminal 152 may include an indication that the desired information was not present at the third terminal.

In accordance with another embodiment, third terminal 156 may additionally send a search request message to yet another terminal, such as fourth terminal 158. Such a message may be sent if the requested information is not present at the third terminal. Fourth terminal 158 may receive the search request message, and generate and send a response message in a manner similar to that described above in conjunction with the second and third terminals.

This network arrangement between terminals may be expanded beyond that which is shown to include any number of different terminals. This arrangement allows for searches using terminals that are not directly in communication with the first terminal. For instance, terminals 154 and 156 are in direct communication with terminal 152. However, terminal 158 is in indirect communication with terminal 152 by virtue of intermediate terminal 156.

At some point, controller 430 of first terminal 152 receives one or more information search response messages (block S540). These messages may have been sent from second terminal 154, third terminal 156, fourth terminal 158, or some combination thereof. First terminal 152 then determines if information corresponding to the search request is present within the response message or messages (block S550).

If such information is present, then the received information may be displayed at the first terminal in accordance with block S580. On the other hand, if the requested information is not present within the response message or messages, then controller 430 of first terminal 152 sends a reverse channel request to SP server 110 to search for the requested information. This request is sent via second base station 140 and PDSN 120 (block 560).

SP server 110 ultimately receives the search request message from first terminal 152, and responsively generates a search response message which includes information that pertains to the requested information. The SP server then sends a search response message to first terminal 152. In block S570, first terminal 152 receives the search response message from SP server 110, which may be displayed in accordance with block S580.

Accordingly, responsive to the user's search request, the display of the first terminal may be configured to display the requested information. This may be accomplished using the metadata which corresponds to the requested information. Typically, displaying of the information contained in the search response message is accomplished by overlaying the information on the received broadcast content. If desired, first terminal 152 may store the received information in a database located in memory 440, for example.

A specific and nonlimiting example of the present invention is one in which a plurality of broadcast terminals are implemented in a motor vehicle. Such terminals can receive broadcast content via satellite, as well as search for desired information relating to the broadcast content. If desired, each of the terminals can share broadcast-related content information. This aspect is possible by virtue of the sharing of information between and among the various terminals. Sharing of information advantageously reduces the load upon SP server, and provides for improved search rate of the desired information.

Various methods have been described herein with regard to various system and apparatus components. However, as is understood by those of ordinary skill, such embodiments of the present invention are not so limited and such methods may be implemented using other components.

The foregoing embodiments and advantages are merely exemplary and are not to be construed as limiting the present invention. The present teaching can be readily applied to other types of apparatuses. The description of the present invention is intended to be illustrative, and not to limit the scope of the claims. Many alternatives, modifications, and variations will be apparent to those skilled in the art.

## Claims

1. A terminal, comprising:
an input unit for receiving user input; and
a controller for sending a search request for information to at least one associated terminal responsive to said user input, wherein said search request relates to broadcast content received by said terminal.

2. The terminal of claim 1, further comprising:
a display for displaying content information which is received from said at least one associated terminal responsive to said search request.

3. The terminal of claim 1, wherein said terminal comprises a broadcast terminal.

4. The terminal of claim 1, further comprising:
memory for storing content information which is received from said at least one associated terminal responsive to said search request.

5. The terminal of claim 1, wherein said controller is configured to:
send said search request for information to a plurality of associated terminals responsive to said user input.

6. The terminal of claim 5, further comprising:
a display for displaying content information which is received from one of said plurality of associated terminals responsive to said search request.

7. The terminal of claim 1, wherein said controller is structured to send said search request for information using a transmission operation selected from the group consisting of unicast, multicast, and broadcast.

8. The terminal of claim 1, wherein if requested information is not received from said at least one associated terminal responsive to said search request, then said controller is structured to:
send a second search request for information to a service provider server, wherein said second search request relates to said broadcast content received by said terminal.

9. The terminal of claim 8, further comprising:
a display for displaying content information which is received from said service provider server responsive to said second search request.

10. A method of searching for broadcast information, said method comprising:
receiving at a terminal a request for information from a user, wherein said request for information relates to broadcast content received by said terminal; and
sending a search request to at least one associated terminal responsive to said request for information from said user.

11. The method of claim 10, further comprising:
receiving content information from said at least one associated terminal responsive to said search request; and
displaying said content information.

12. The method of claim 10, further comprising:
receiving content information from said at least one associated terminal responsive to said search request; and
storing said content information in memory.

13. The method of claim 10, further comprising:
sending said search request for information to a plurality of associated terminals responsive to said user input.

14. The method of claim 13, further comprising:
receiving content information from one or more of said plurality of associated terminals responsive to said search request; and
displaying said content information.

15. The method of claim 10, wherein said sending is accomplished using a transmission operation selected from the group consisting of unicast, multicast, and broadcast.

16. The method of claim 10, wherein if requested information is not received from said at least one associated terminal responsive to said search request, then said method further comprises:
sending a second search request for information to a service provider server, wherein said second search request relates to said broadcast content received by said terminal.

17. The method of claim 16, further comprising:
receiving content information from said service provider server responsive to said second search request; and
displaying said content information.

18. The method of claim 17, wherein said displaying comprises:
displaying said content information overlaid on said broadcast content.

19. The method of claim 10, wherein if requested information is not received from said at least one associated terminal responsive to said search request, then said method further comprises:
sending a second search request for information to a second terminal, wherein said second search request relates to said broadcast content received by said terminal.

20. A broadcasting system, comprising:
a first terminal for sending a search request message for information responsive to user input, wherein said information relates to broadcast content received by said first terminal; and
a second terminal for receiving said search request message for said information and for responsively sending to said first terminal a response message which includes content information corresponding to said search request message.

21. The system of claim 20, further comprising:
a first base station for transmitting said broadcast content to said first terminal through a forward channel.

22. The system of claim 20, wherein if said content information does not include said information corresponding to said search request message, then said first terminal is structured to:
send a second search request for information to a service provider server, wherein said second search request relates to said broadcast content received by said first terminal.

23. The system of claim 22, further comprising:
a second base station for transmitting said second search request for information received from said first terminal through a reverse channel.

24. The system of claim 20, wherein communication between said first terminal and said second terminal defines an ad-hoc network having a wireless link structure.

25. The system of claim 20, wherein said first terminal is structured to send said search request message using a transmission operation selected from the group consisting of unicast, multicast, and broadcast.

26. The system of claim 20, wherein if said second terminal does not contain said content information corresponding to said search request, then system further comprises:
a third terminal for receiving a search request message for said information from said second terminal, said third terminal configured to responsively send to said second terminal a response message which includes said content information.

27. A method of searching for broadcast information, said method comprising:
receiving at a terminal a request for information from a user, wherein said request for information relates to broadcast content received by said terminal;
searching said terminal for said information, wherein if said information is found during said searching, then said method further comprises:
displaying said information, otherwise, if said information is not found during said searching, then said method further comprises:
sending a search request to at least one associated terminal responsive to said request for information from said user.

28. The method of claim 27, further comprising:
receiving content information from said at least one associated terminal responsive to said search request; and
storing said content information in memory.

29. The method of claim 27, further comprising:
sending said search request for information to a plurality of associated terminals responsive to said user input.

30. The method of claim 27, further comprising:
receiving content information from said at least one associated terminal responsive to said search request; and
displaying said content information.

31. The method of claim 27, wherein said sending is accomplished using a transmission operation selected from the group consisting of unicast, multicast, and broadcast.

32. The method of claim 27, further comprising:
receiving content information from said at least one associated terminal responsive to said search request, wherein said content information includes a message indicating that requested information is not present on said second terminal.

33. The method of claim 27, wherein if requested information is not received from said at least one associated terminal responsive to said search request, then said method further comprises:
sending a second search request for information to a service provider server, wherein said second search request relates to said broadcast content received by said terminal.

34. The method of claim 33, further comprising:
receiving content information from said service provider server responsive to said second search request; and
displaying said content information.

35. The method of claim 34, wherein said displaying comprises:
displaying said content information overlaid on said broadcast content.

36. A method of searching for broadcast information, said method comprising:
receiving at a first terminal a request for information from a user, wherein said request for information relates to broadcast content received by said first terminal;
sending a search request to a first associated terminal responsive to said request for information from said user, wherein if content information corresponding to said search request is located at said first associated terminal, then said method further comprises:
sending to said first terminal a response message which includes said content information, otherwise if said content information is not located at said first associated terminal, then said method further comprises:
sending a search request message for said content information from said first associated terminal to a second associated terminal.

37. The method of claim 36, further comprising:
sending a response message, which includes said content information, from said second associated terminal to said first associated terminal.

38. The method of claim 36, further comprising:
sending a response message, which includes said content information, from said second associated terminal to said first terminal.
